Europäisches Patentamt

European Patent Office

Office européen des brevets

(19)

(11) Publication number: 0 375 401
A1

## (12) EUROPEAN PATENT APPLICATION

(21) Application number: 89313368.6

(22) Date of filing: 20.12.89

(51) Int. Cl.⁵: **G06F 15/80**

(30) Priority: 20.12.88 GB 8829622

(43) Date of publication of application:
27.06.90 Bulletin 90/26

(84) Designated Contracting States:
AT BE CH DE ES FR GB GR IT LI LU NL SE

(71) Applicant: AMT(HOLDINGS) LIMITED
65 Suttons Park Avenue
Reading Berkshire RG6 1AZ(GB)

(72) Inventor: Hunt, David John
3 Moores Green Wokingham
Berkshire RG11 1QG(GB)
Inventor: Thorpe, Roger Thomas
24 Avellino
Irvine CA 92714(US)
Inventor: Broughton, Andrew John
23952 Dovekie Cr.
Laguna Niguel CA 92677(US)

(74) Representative: Rackham, Stephen Neil et al
GILL JENNINGS & EVERY 53-64 Chancery
Lane
London WC2A 1HN(GB)

(54) Processor array.

(57) A processor array comprises a number of interconnected processing elements (PE). Each processing element (PE) includes row and column select inputs connected via respective row and column select lines to a control unit (MCU) for the array. The row select inputs in each row and the column select inputs in each column are connected in common. The processing elements (PE) receive broadcast row and column data over the respective row and column select lines.

*Fig.2.*

# PROCESSOR ARRAY

The present invention relates to processor arrays for use in parallel processing computer systems. An example of such an array is disclosed and claimed in GB-A-1445714.

Typically such a processor array comprises a number of processing elements arranged in rows and columns. Each processing element, other than those on the very edge of the array, is connected to its four nearest neighbours in the array in the North, South, East, and West directions to permit transfer of data between them. Each processing element is also connected to data buses associated with its respective row and column so that in addition to the transfer of data over nearest neighbour connections data can be broadcast to entire rows or columns.

The processing elements are connected to a control unit which controls the addressing of the array. In particular each element has a column select input and a row select input connected via respective row and column select lines to the control unit. These inputs when TRUE enable the store associated with a respective processing element. Thus to read out the values from the store of a particular row of elements, for example, all of the select column (SC) inputs are set TRUE and the select row (SR) inputs in the selected row are set TRUE but are FALSE elsewhere. Then in the unique row of processing elements the data output is equal to the input from the associated store and can be read out over data output lines connected between every element in the row and an AND logic unit associated with the row to provide the required row output.

According to the present invention, a processor array comprising a number of interconnected processing elements, each processing element having row select and column select inputs connected via respective row and column select lines to a control unit is characterised in that the row and column select inputs in each row or column are connected in common and the processing elements are arranged to receive broadcast row and column data over their respective row and column select lines.

As described above, it is known to provide in a processor array in addition to paths for the transmission of data between individual elements means to broadcast data to an entire row or column. This requires data paths connected in common to all the elements in a given row or column. In known systems dedicated broadcast data buses have been provided for this purpose. The present inventors have found however that the processing elements can be arranged so that the same lines which carry the row and column select signals can also be used to carry the broadcast row and column data, thereby considerably reducing the wiring complexity of the array as a whole.

Preferably each processing element includes an activity control unit and the activity control unit is arranged to receive activity control signals from the row and column select inputs.

It is known to have activity control units associated with each processing element of the array. In simple terms these activity control units function to turn their respective processing elements ON or OFF so that, for example, when data is broadcast to the array as a whole certain elements can be masked by turning their associated activity control units OFF. As described below, in the present invention the activity unit is arranged so that its control inputs are received via the same data paths that are used for column or row selection and for the broadcasting of data. This enables a further reduction in the wiring complexity of the processing element chip.

Preferably the processor array includes multiplexers connected between the control unit and the row and column select lines and arranged to multiplex row or column select signals and broadcast row or column data onto the lines. Preferably the processor array further includes an address decoder arranged to receive row or column addresses from the control unit and to transmit to the multiplexers appropriate row or column select signals derived from the row or column addresses.

An array in accordance with the present invention is now described in detail with reference to accompanying drawings in which;

Figure 1 is a block diagram showing a system incorporating a processor array in accordance with the present invention;

Figure 2 is a block diagram showing one of the processing elements of Figure 1;

Figure 3 is a detailed schematic of such a processing element;

Figure 4 is a schematic of the decoder of Figure 1;

Figure 5 is a schematic of the multiplexer of Figure 1;

Figure 6 is a diagram showing wiring routes for row and column responses of the array to the MCU; and

Figure 7 is a diagram showing the wiring routes for the transmission of data and address signals to the array.

A parallel processing computer system comprises an array 1 connected via a control unit MCU to a host computer 2. The array 1 is formed of single bit processing elements PE arranged in rows and columns. Each processing element PE, with the exception of those on the edge of the array, is connected to its four nearest neighbours.

In practice although the topology and connectivity of the array is as described the physical arrangement of the processing elements PE may be other than in a flat square array. For example the array may be folded back on itself to give an arrangement in which there are two or more layers of processing elements PE arranged one above another. In the preferred example the array comprises 64 processing elements PE arranged 8 x 8. In practice a number of such arrays may be joined together to form a larger array of overall size 64 x 64.

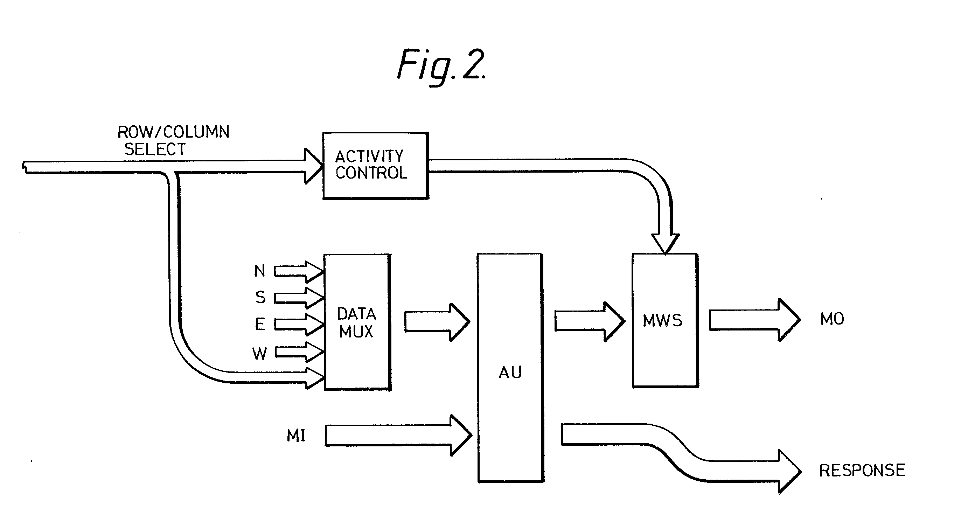

Each processing element PE has associated with it a local memory from which data is read and to which data is written. There is also within the processing element PE an arithmetic unit 3 comprising an adder and associated operand registers. The values written to the local memory may be the results of a calculation within the arithmetic unit 3 or alternatively may be values received directly from the nearest neighbour connections (N,S,E,W) or may be broadcast row or column data received via the row/column select lines. The data paths within each processing element PE are shown in Figure 2. Each processing element PE is connected to row/column select lines. All the row select lines in a given row and all the column select lines in a given column are connected in common. The lines are formed as buses extending along each row or column with branches extending to each processing element PE.

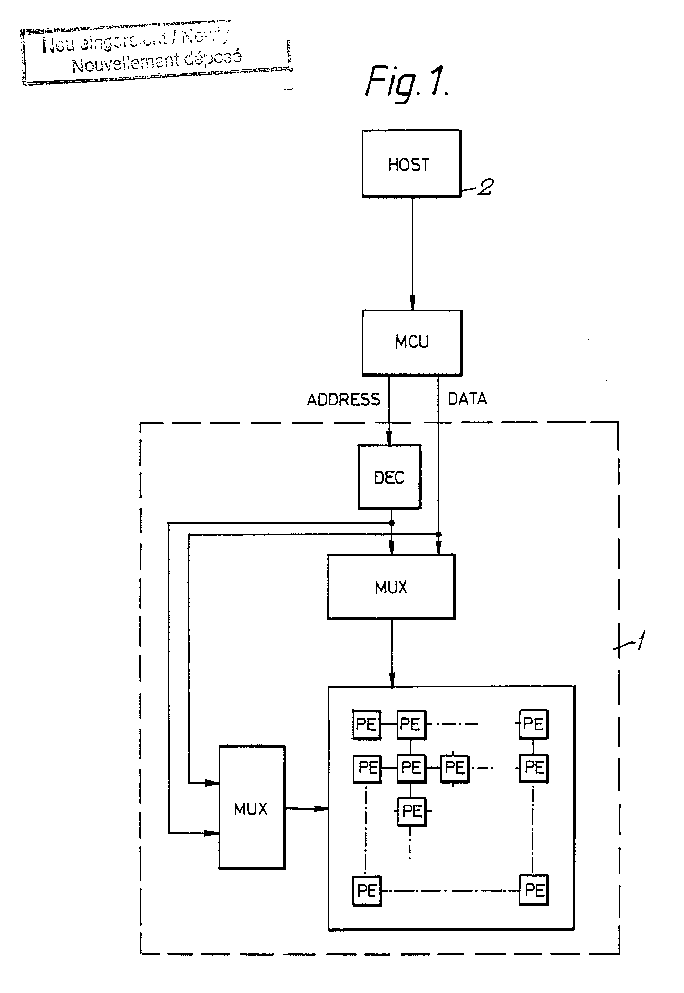

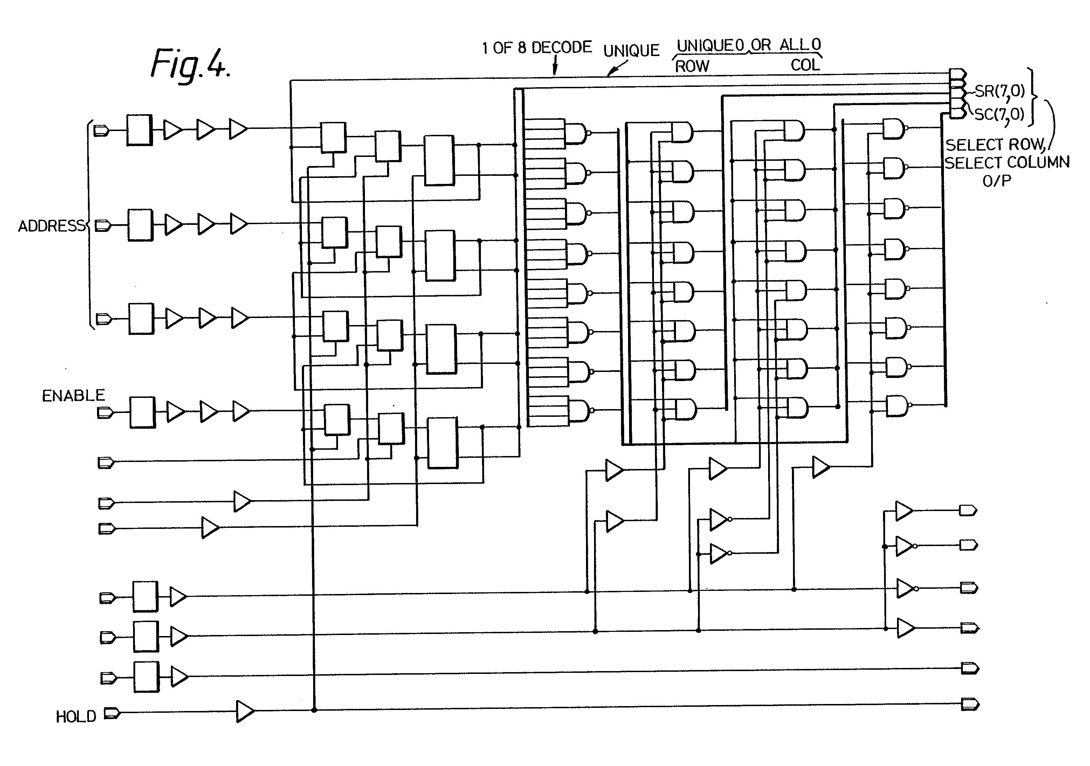

In use the control unit MCU distributes address and row/column data in the manner described below and also controls the functioning of the array by broadcasting control signals to the processing elements PE, to the decoder DEC and to the multiplexers MUX. Three bit addresses are output by the control unit MCU. The decoder DEC shown in detail in Figure 4, decodes these addresses to produce appropriate row or column select signals for the processing elements PE. The first stage of the decoder produces a unique 0 on the row or column select line of the row or column that is to be selected. The second stage provides the option of an alternative method of addressing the array in which all rows or columns are selected. In any particular instruction the MCU either broadcasts data to the array, or receives data from the array, or neither of these. Hence at the boundary of the array (the dotted line in Figure 1) the data paths between the MCU and the array are provided by single bidirectional buses which at different times carry data both to and from the array.

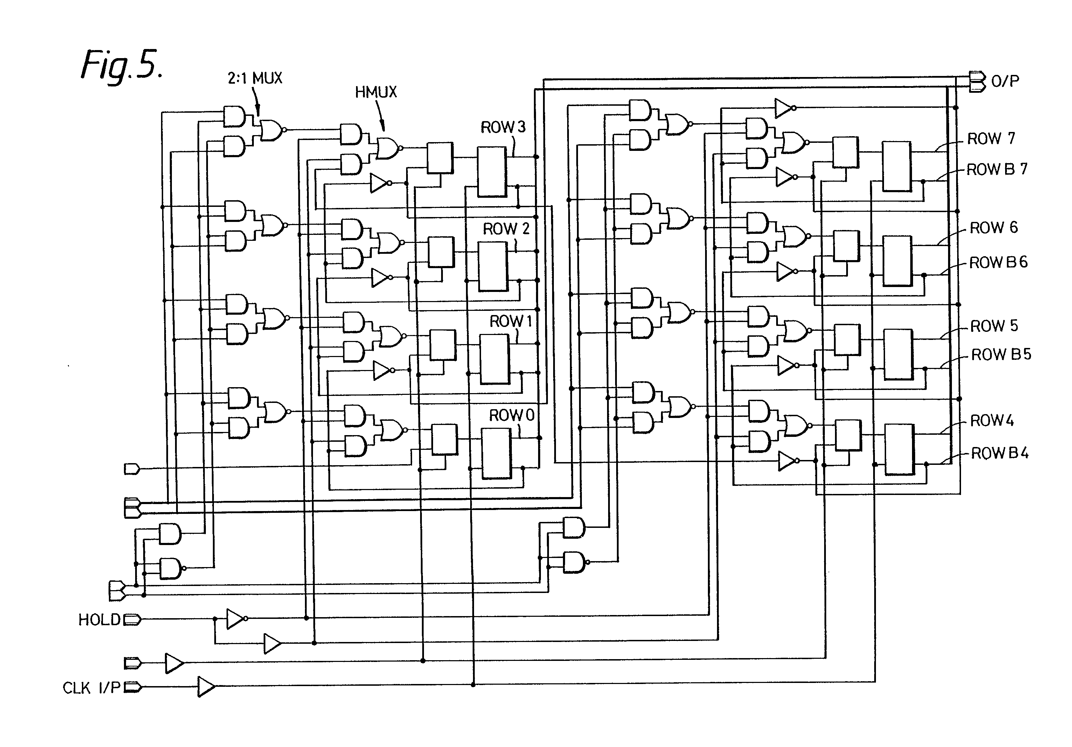

In addition to carrying row/column select signals from the decoder DEC the row and column select lines are also used to carry broadcast row or column data. This data is multiplexed with the row/column select signals by the multiplexer MUX. Figure 5 shows in detail the multiplexing circuit for row data: this is duplicated for column data. The main element of this circuit is a number of 2:1 multiplexers which receive column select signals from the decoder DEC and broadcast row or column data from the control unit MCU. The multiplexers output the row and column select signals and the broadcast row and column data in appropriate time slots on their respective row and column select lines. In the preferred example both TRUE ("ROW","COL") and complement ("ROWB", "COLB") select lines are provided for each row and column. The multiplexer MUX is arranged to provide corresponding TRUE and complement outputs. The 2:1 multiplexers are followed by further multiplexers HMUX used for hold and serial diagnostics. The ROW select lines ROW0, ROW1, ROW2... have a unique zero or are all set to zero, or carry row data.

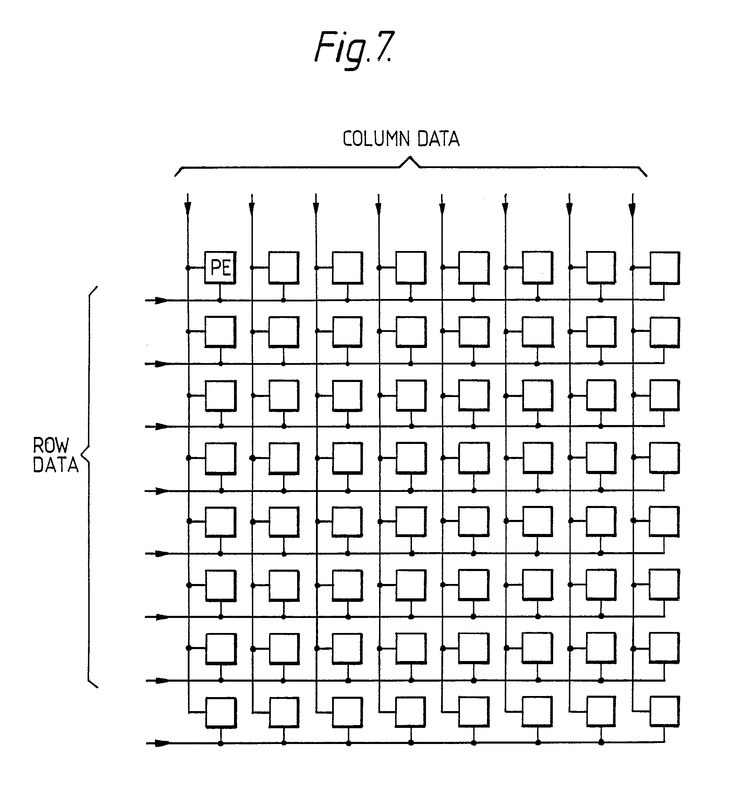

The row and column select lines are arranged as shown in Figure 7 so that each bit of the broadcast row data is connected to every processing element PE in a given row and similarly for columns and column data. A bit of row data is therefore used to identify a particular row or to broadcast the same pattern of bits to every column. Similarly column data identifies a particular column or broadcasts a pattern to every row.

Using a decoder, multiplexer and processing elements PE of the type described it is possible to execute three principal types of instruction.


### 1. DATA INPUT TO THE PE

In this case the data multiplexer selects an input that may be loaded into PE registers or combined with existing contents of PE registers in various ways before being written to the registers. The options are:-

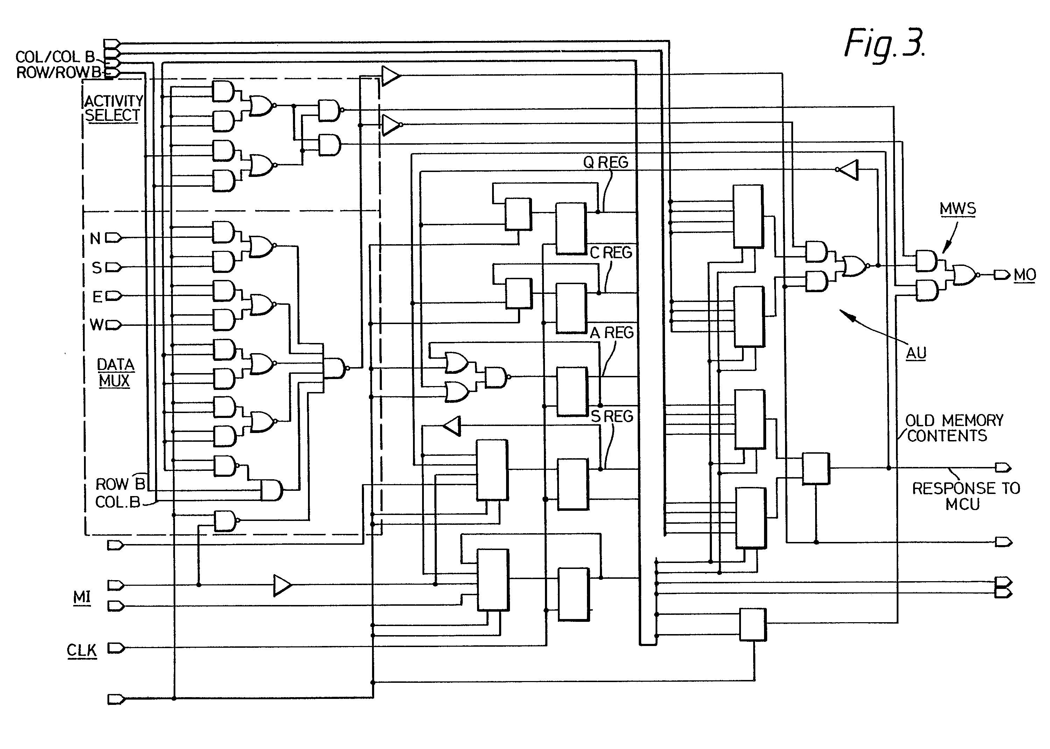

(a) Signals ROWB and COLB are used near the bottom of the data multiplexer as shown in Figure 3. If both are true then the other select signals for the multiplexer determine which particular signal is input to the PE. For example, signals CTL10 through CTL13 select a value from one of four nearest neighbour PE's (N,E,S or W) and signal CTL6 selects the memory input bit MI of the same processing element as operand, in which case the processing element reads the data for processing on its own local store.

(b) If COLB is TRUE, ROWB contains data (inverted) and all the other data multiplexer select signals are FALSE then the input to the PE is the data broadcast from the MCU on the row data lines.

(c) Similarly if ROWB is TRUE, COLB contains data (inverted) and all the other data multiplexer select signals are FALSE then the input to the PE is the data broadcast from the MCU on the column data lines.

Thus by transmitting the appropriate signals on the row and column select lines we can select row data, column data, or data from the local store as the input to the processing element PE.

## 2. RESPONSE OUTPUT FROM THE PE

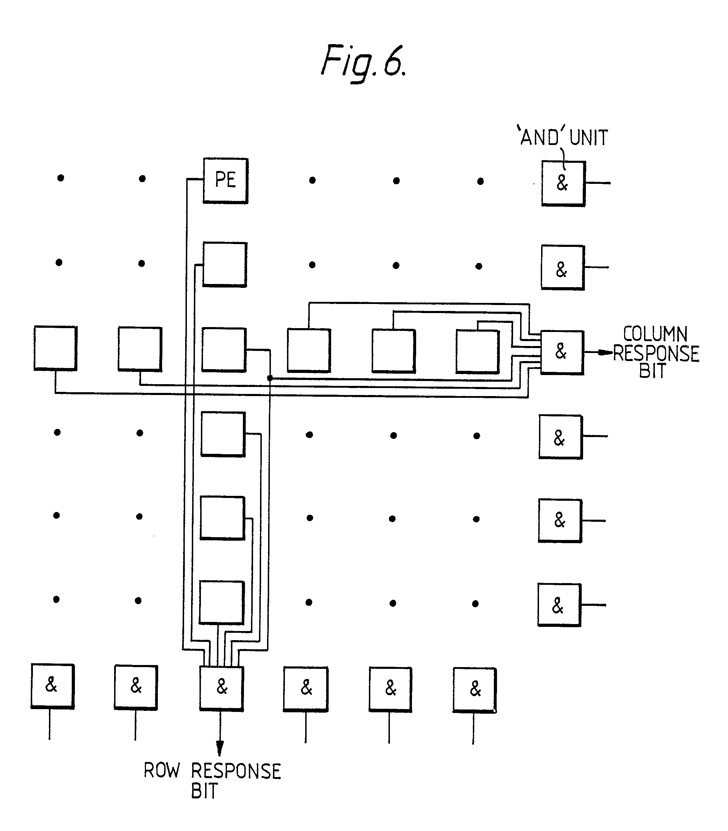

In this case the data multiplexer selects data that is to take part in the response. The selected value is output from the individual PE from the output shown near the bottom right of figure 3 and combined with the other PE outputs. Dedicated lines are provided for the response outputs as shown in figure 6. The outputs are combined at AND units provided along two edges of the array 1 and the result of either the row AND or the column AND is returned to the MCU. The options are :-

(a) Signals ROWB and COLB are both TRUE and the other select signals for the multiplexer choose a particular signal to use as the PE response. For example, CTL6 selects the memory input bit (MI) of the same PE. The outputs of all the PE's are ANDed together by rows or by columns dependent on the instruction.

(b) If COLB is TRUE and ROWB contains a unique 1, then the response output is a function both of the row data and what is selected by the other multiplexer control signals. The effect is that in the selected row, the memory data MI, for example, is output on the response, and in all other rows the output is TRUE regardless of the value of MI. When the outputs of all the PE's are combined by ANDing all the rows together, the result is the same as a single row of MI values, the row concerned having been identified by the position of the unique bit in the row decode.

(c) Similarly if ROWB is TRUE, and COLB contains a unique 1, a selected column value may be returned to the MCU.

## 3. DATA OUTPUT FROM MEMORY

The output to memory which is a single bit for each PE is shown as MO in figure 2. The output is gated by a memory write select unit MWS which in turn receives an input from the activity control. The value output therefore depends on the activity select logic, the output of which is referred to simply as the "activity", and on the MWS logic. The function of the MWS logic is as follows: when an activity is TRUE for a particular PE, then the output of the PE, that is the result of the sum function, is selected to be written to memory; when activity is FALSE the old memory contents which were previously captured in the S register are selected and re-written to memory so that there is no change in memory contents.

As shown in Figure 3 the input to the activity control is taken from the row/column select lines and so uses row or column data. The options are:-

(a) If CTL2 and CTL3 are both FALSE then the activity options are specified by CTL0 and CTL1 the available options :-
   i. Activity = "All" i.e. TRUE in every PE
   ii. Activity = A, where A is the value of the A-register in the same PE.
   iii. Activity = complement of A
   iv. Activity = "None" i.e. FALSE in every PE. This option is not normally useful but is concerned with outputing information other than the old memory data onto MO.

In these cases the data multiplexer selects data to be operated upon by the sum function to create the memory write data. This may include the broadcast of data on ROWB or COLB.

(b) If CTL2 is TRUE, CTL3 is FALSE and ROW is a unique 0, then the activity options above are all ANDed with the selection of the row specified by the position of the unique 0. Again the data multiplexer may select data to be operated upon by the PE including the selection of data on the COL signals. In the unselected rows, signal ROWB is FALSE thus causing the PE input to be FALSE, but this is unimportant since in such PEs the old memory contents are re-written regardless of the PE data input.

(c) Similarly if CTL3 is TRUE CTL2 is FALSE and COL is a unique 0, then the activity is TRUE only in a selected column.

Thus in the arrangement described above the same row data paths (ignoring the fact that there are TRUE and complement versions) are used for three distinct purposes at different times: broadcast of data; selection of a row for response output; and selection of a row for activity controlled write. The column data paths have corresponding functions with orthogonal orientation.

## Claims

1. A processor array comprising a number of interconnected processing elements (PE), each processing element (PE) having row select and column select inputs connected via respective row and column select lines to a control unit (MCU), characterised in that the row and column select inputs in each row or column are connected in common and the processing elements (PE) are arranged to receive broadcast row and column data over their respective row and column select lines.

2. A processor array according to Claim 1, in which each processing element (PE) includes an activity control unit and the activity control unit is connected to the respective row and column select inputs and arranged to receive activity control signals from the row and column select inputs.

3. A processor array according to claim 1 or 2, including multiplexers (MUX) connected between the control unit and the row and column select lines and arranged to multiplex row or column select signals and broadcast row or column data onto the lines.

4. A processor array according to claim 3, including an address decoder (DEC) arranged to receive row or column addresses from the control unit (MCU) and to transmit to the multiplexers (MUX) appropriate row or column select signals derived from the row or column addresses.

5. A processor array according to anyone of the preceding claims, in which each processing element (PE) includes on its input side a data multiplexer (DATA MUX) arranged to receive data from neighbouring processing elements and from the respective row and column select inputs.

*Fig.1.*

HOST — 2

MCU

ADDRESS    DATA

DEC

MUX

MUX

PE — PE — · — · — PE

PE — PE — PE — · — PE

PE

PE — · — · — · — PE

— 1

EP 0 375 401 A1

# Fig.2.

ROW/COLUMN
SELECT

ACTIVITY
CONTROL

N
S
E
W

DATA
MUX

AU

MWS

MO

MI

RESPONSE

Fig.3.

EP 0 375 401 A1

# Fig.4.

1 OF 8 DECODE   UNIQUE   $\overline{\text{UNIQUE0 OR ALL0}}$
                          ROW          COL

SR(7,0)
SC(7,0)

SELECT ROW,
SELECT COLUMN
O/P

ADDRESS

ENABLE

HOLD

EP 0 375 401 A1

Fig.5.

# Fig.6.

'AND' UNIT

&

&

&

COLUMN
RESPONSE
BIT

&

&

&

PE

&   &   &   &   &   &

ROW RESPONSE
BIT

# Fig.7.

COLUMN DATA

ROW DATA

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | IEEE 1987 SOLID-STATE CIRCUITS CONFERENCE, vol. 30, 1st edition, February 1987, pages 198-199,399-400, IEEE, New York, US; R. GRONDALSKI: "A VLSI chip set for a massively parallel architecture" * Page 198, column 1, lines 49-50; column 2, lines 1-32; page 199, figures 1,2 * | 1,3,5 | G 06 F 15/80 |
| A | INTERNATIONAL SYMPOSIUM ON NEW DIRECTIONS IN COMPUTING, 12th-14th August 1985, Trondheim, pages 278-283, IEEE, New York, US; KUMAR et al.: "An array architecture for high speed parallel processing" * Page 279, column 1, lines 10-38; figure 1 * | 1 | |
| A,D | GB-A-1 445 714 (ICL) * Page 2, lines 116-129; page 3, lines 1-27; figure 1 * | 4 | |

TECHNICAL FIELDS SEARCHED (Int. Cl.5)

G 06 F 15/80

The present search report has been drawn up for all claims

| Place of search | Date of completion of the search | Examiner |
|---|---|---|
| THE HAGUE | 19-02-1990 | DHEERE R.F.B.M. |

EPO FORM 1503 03.82 (P0401)